# EUROPEAN PATENT SPECIFICATION

(11) **EP 1 415 881 B1**
(45) Date of publication and mention of the grant of the patent: **12.11.2008**
(21) Application number: 03024925.4
(22) Date of filing: 29.10.2003
(51) Int. Cl.: B61F 5/32, F16F 1/04

(54) **Primary suspension for a railway truck, with a nonlinear characteristic spring and a swing arm.**
Primärfederung für ein Drehgestell, mit einem progressiven Federelement und einem Schwenkarm.
Suspension primaire pour un bogie, avec un ressort non-linéaire et un bras oscillant.

(30) Priority: 30.10.2002 JP 2002315425
(43) Date of publication of application: 06.05.2004
(73) Proprietor: KAWASAKI JUKOGYO KABUSHIKI KAISHA, Kobe shi, Hyogo 650-8670 (JP)
(72) Inventor: Nishimura, Takehiro, Kobe-shi Hyogo 651-1114 (JP)
(74) Representative: Maxton Langmaack & Partner

(56) References cited:
- FR-A- 2 391 890
- GB-A- 301 075
- GB-A- 1 282 971
- GB-A- 2 355 442
- NL-A- 9 100 701
- US-A- 3 799 065

## Description

### BACKGROUND OF THE INVENTION

### 1. Field of the Invention

The present invention relates to a nonlinear characteristic spring, a radius arm type truck using this spring and a railway vehicle.

### 2. Description of Related Art

Conventionally, a radius arm type truck used in a railway vehicle is known. For example, this radius arm type truck is disclosed in U.S. Patent No. 5, 189, 962 and Japanese Patent No. 2,511,120 (see pages 3 to 4 and Fig. 1 of this publication). In this radius arm type truck, supporting rigidity of its radius arm supporting device is an important element having a great influence on riding comfortableness of the vehicle. Further, a coil spring is used as a primary spring used in the truck for the railway vehicle. This coil spring is basically a spring having a linear characteristic in which spring constant is invariable if load applied on the spring is increased. In general, the riding comfortableness of the vehicle is better when the spring constant of the primary spring is smaller.

In the case of a vehicle in which a full passenger state is rare and the load on the spring commonly varies within the range from empty state to substantially fixed-number passenger state, it is desirable to design the vehicle so that passengers feel most comfortable when substantially fixed-number or less passengers are on the vehicle. However, such requirement is insufficiently met in the radius arm type truck using the linear characteristic spring as the primary spring. When the linear characteristic coil spring having the small spring constant is used in the truck to improve riding comfortableness under the condition in which substantially fixed-number or less passengers are on the vehicle, difference between spring flexure due to the load in the empty state and spring flexure due to the load in the full passenger state becomes too large, which adversely affects the operation of a current collector as described later. As defined herein, the full passenger state refers to a state in which an interior of vehicle is filled up with passengers including standing passengers, and fixed-number passenger state refers to a state in which the passengers are all seated and few passengers are standing.

Accordingly, for the purpose of gaining riding comfortableness in the vehicle in which the load on the spring commonly varies within the range from the empty state to substantially fixed-number passenger state, a primary spring device having the primary spring having nonlinear characteristic may be used. Such a spring is for example disclosed in GB-A-1 282 971.

Japanese Utility Model No. 2,582,044 also discloses a primary spring device having nonlinear characteristic (see page 2 and Figs. 1 and 3 of this publication). This primary spring device is an axle box supporting device for a railway vehicle in which a ring-shaped elastic body is provided between a substantially-conical lower fitting member fixed to an axle box and an outer fitting member fixed to a base frame and having a substantially-conical internal space. In this axle box supporting device, a coil spring is fitted outside of the outer fitting member and between the axle box and the base frame. The elastic body itself has nonlinear characteristic. In this device, the coil spring and the ring-shaped elastic body are arranged in parallel with a vertical load. Since the coil spring and the elastic body receive the vertical load in parallel, the coil spring is adapted to bear some of the vertical load, and the vertical load applied on the elastic body is correspondingly reduced. Accordingly, permanent set in fatigue caused by load applied for a long period of time, can be reduced in the elastic body even when the rigidity of the elastic body in the vertical direction is reduced. Thus, the riding comfortableness in the railway vehicle can be improved.

The axle box device described above has advantage of capable of bearing the loads in both vertical direction and horizontal direction. However, the structure of the axle box device become complex, because the coil spring and the elastic body attached between the lower fitting member and the outer fitting member are used to gain the nonlinear characteristic.

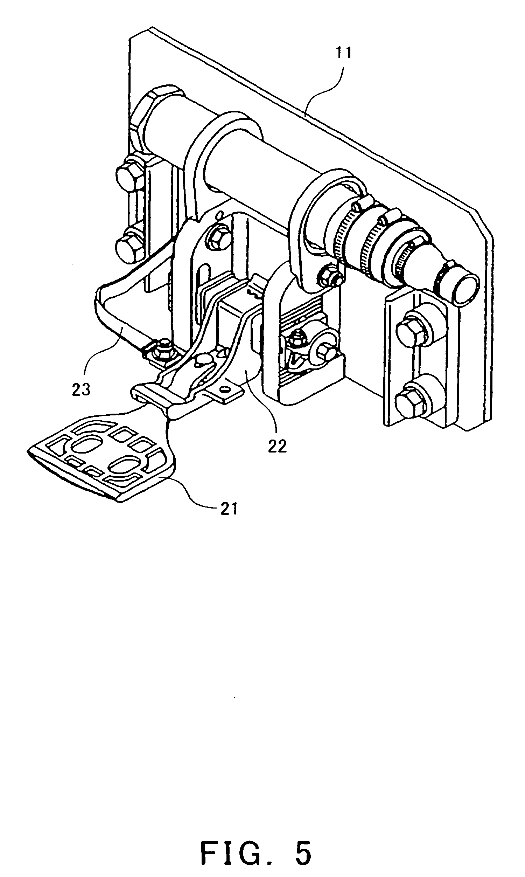

Further, a truck having a current collector (corresponding to a so-called pantograph) is also known. This truck takes in an electric power by making the current collector come in contact with a third rail for power supply while the truck is traveling on a running rail. The truck runs along the rail provided with the third rail for power supply arranged in parallel with the rail for running. For example, as shown in Fig. 5, this truck is constructed such that the current collector 21 which comes in elastic contact with the third rail is attached to the base frame 11 and the power is taken in from this current collector 21. The current collector 21 is attached to an arm member 22 elastically supported by the base frame 11 to be vertically movable with the arm member 22. A flexible electric cable 23 is connected to the current collector 21.

In this case, the maximum moving amount of the current collector 21 is restricted to a predetermined magnitude (e.g., about 35 mm) in view of its structural limitation. Accordingly, it is undesired that the tuck vertically move beyond the predetermined magnitude. For such reasons, the spring constant of the linear coil spring used in the primary spring device is restricted by the maximum moving amount of the current collector 21.

### SUMMARY OF THE INVENTION

Under the circumstances, the present invention has been made, and an object of this invention is to provide a spring having nonlinear characteristic that can improve riding comfortableness when fixed-number or less passengers are on a vehicle in which a full passenger state is rare and the load on the spring commonly varies within the range from empty state to a certain state between the empty state and the full passenger state (for example, substantially fixed-number passenger state), and a radius arm type truck using the spring,

A nonlinear characteristic spring of the present invention is defined in claim 1 and the spring has tapered portions having a spring wire/rod(hereinafter referred to as wire) diameter that gradually decreases as it is closer to the end portions of the spring wire. As used herein, "the spring wire diameter that gradually decreases as it is closer to an end portion of the spring wire of the coil spring" means that the coil spring includes a portion having a spring wire diameter that gradually decreases as it is closer to an end portion of the spring wire. For example, the spring wire diameter is thus varied by machining process.

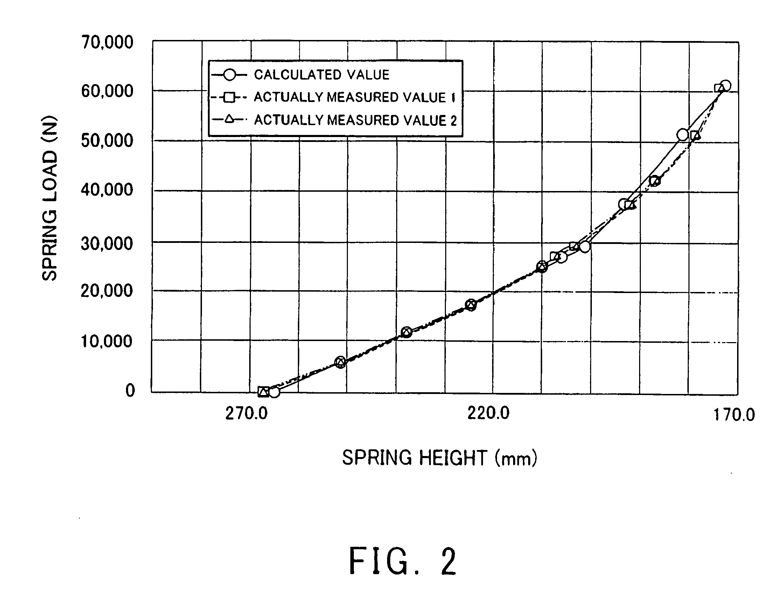

The coil spring so formed has nonlinear characteristic (see Fig. 2). Accordingly, when the coil spring is used as the primary spring of the truck for a railway vehicle in which the full passenger state is rare and the load on the spring commonly varies in the range from the empty state to a certain state between the empty state and the full passenger state (for example, substantially fixed-number passenger state), the primary spring is softened (spring constant is smaller) in the range from the empty state to the substantially fixed-number passenger state, while the spring is made relatively stiff (spring constant is larger) in the range from the substantially fixed-number passenger state to the full passenger state. As a result, riding comfortableness is improved when the fixed-number or less passengers are on the vehicle without generating large spring flexure unlike in the conventional primary spring.

Furthermore, this coil spring is lightweight in contrast to a taper coil spring having nonlinear characteristic by changing its coil diameter. Although the taper coil spring requires a large space for a large diameter portion thereof to be placed, the nonlinear characteristic coil spring of the present invention gains the nonlinear characteristic by changing the spring wire diameter, and thereby, the above described problem is avoided.

In this structure, a constant-diameter portion having a constant spring wire diameter is formed and the tapered portion is formed continuously on each of both ends of this constant-diameter portion.

In such a construction, the constant-diameter portion having the constant spring wire diameter is formed at the intermediate portion of the coil spring, and tapered portions each having the spring wire diameter that gradually decreases as it is closer to the end portion of the spring wire, are formed on both ends of the constant-diameter portion. Accordingly, required nonlinear characteristic can be obtained by combining the tapered portion and the constant-diameter portion of proper lengths (i.e., by adjusting the lengths of the tapered portion and the constant-diameter portion).

A radius arm type truck of the present invention is defined in claim 2 and comprises a base frame, an axle box for supporting an axle, a radius arm rotatably supported by the base frame at one end thereof and connected to the axle box at an opposite end thereof, and a coil spring provided as a primary spring between an upper portion of the axle box and the base frame, wherein the coil spring is formed by a nonlinear characteristic spring having a tapered portion having a spring wire diameter that gradually decreases as it is closer to an end portion of a spring wire.

In the above construction, since the coil spring as the primary spring has nonlinear characteristic, the primary spring is softened (spring constant is smaller) in the range from the empty state to the substantially fixed-number passenger state in the vehicle in which full passenger state is rare and substantially fixed-number passenger state is common, and as a result, riding comfortableness is improved when the fixed-number or less passengers are on the vehicle. Therefore, it is not necessary to provide both of the elastic body and the coil spring unlike in the radius arm device disclosed in the prior art, and riding comfortableness is improved when the fixed-number or less passengers are on the vehicle, with a simple construction.

When the coil spring is mounted, it is preferable that the radius arm type truck may further comprise a lower spring seat provided on the upper portion of the axle box with a first elastic member disposed between the lower spring seat and the axle box; and an upper spring seat provided on the base frame with a second elastic member disposed between the upper spring seat and the base frame, wherein the coil spring is mounted between the upper spring seat and the lower spring seat.

The truck may be constructed to run along a railroad provided with a third rail for power supply arranged in parallel with a rail for running, and a current collector that comes in elastic contact with the third rail may be attached to the base frame.

In accordance with such construction, maximum moving amount of the current collector is not restricted by its structural limitation even in the vehicle in which the current collector for taking in electric power by elastic contact with the third rail is attached to the base frame. Accordingly, the spring constant is not restricted by the maximum moving amount of the current collector unlike in the linear coil spring.

The above and further objects and features of the invention will be more fully be apparent from the following detailed description with accompanying drawings.

### BRIEF DESCRIPTION OF THE DRAWINGS

Fig. 1 is a longitudinal sectional view showing one embodiment of a nonlinear characteristic spring of the present invention, which is used as a primary spring of a truck for a vehicle.

Fig. 2 is a diagram of a load and a spring height showing the relation of the spring (external) load and the spring height of the nonlinear characteristic spring of Fig. 1.

Fig. 3 is a partially cross-sectional front view showing one embodiment of the truck of the present invention.

Fig. 4 is a plan view of the truck in Fig. 3.

Fig. 5 is a perspective view showing one example of a current collector attached to the truck for vehicle.

Fig. 6 is a longitudinal sectional view showing another embodiment of a nonlinear characteristic spring of the present invention, which is used as a primary spring of a truck for a vehicle.

### DESCRIPTION OF THE PREFERRED EMBODIMENTS

The embodiments of the present invention will be described with reference to the drawings.

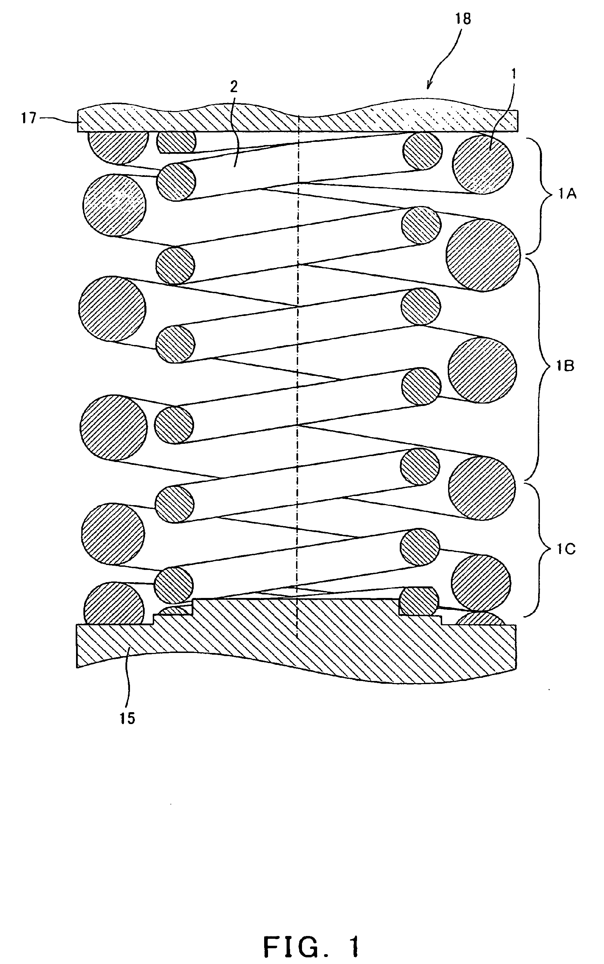

As shown in Fig. 1, a nonlinear characteristic spring 1 of the present invention has a wire diameter that gradually decreases as it is closer to an end portion of the spring wire. Specifically, as shown in Fig. 1, tapered portions 1A and 1C having small and varying wire diameters are formed in the vicinity of upper and lower end portions, and a constant-diameter portion 1B having a large and constant wire diameter is formed in the vicinity of an intermediate portion in the vertical direction. In this embodiment, each of the tapered portions 1A and 1C has a wire diameter of 30 to 35mm, winding number of 1.0, pitch of 51.3 mm, and coil diameter of 184mm. In the upper tapered portion 1A and the lower tapered portion 1C, a connecting portion connected to the constant-diameter portion 1B has a wire diameter of 35mm, the end portion of the spring has a wire diameter of 30mm and the wire diameter linearly decreases from the connecting portion to the end portion in the range of from 35 mm to 30 mm. Its ratio is 0.86.

Meanwhile, the constant-diameter portion 1B have a wire diameter of 35mm (constant), winding number of 1.8, pitch of 66.3 mm, and coil diameter of 189mm. The above specifications of the constant-diameter portion 1B and the tapered portions 1A and 1C are only illustrative and the present invention is not limited to these specifications.

Fig. 2 shows the relation between a spring (external) load and a spring height regarding such a nonlinear characteristic spring by using a calculated value, an actually measured value 1 and an actually measured value 2. As can be seen from Fig. 2, the relation between the spring (external) load and the spring height is not linear, and hence has nonlinear characteristic. Regarding these nonlinear characteristic, the calculated value, the actually measured value 1 and the actually measured value 2 approximately conform to each other. As shown, the variation in the spring height with respect to the spring load is large (the spring is soft) when the load is smaller than around 30, 000N to 40, 000 N, while the variation is small (the spring is stiff) when the load is larger than around 30, 000N to 40, 000N. In this embodiment, the weight of the vehicle in empty state corresponds to approximately 28,000 N, the weight of the vehicle in the substantially fixed-number passenger state corresponds to approximately 40,000 N, and the weight of the vehicle in a full passenger state corresponds to approximately 60,000 N.

In the case of a vehicle in which a full passenger state is rare and substantially fixed-number or less passenger state is common, riding comfortableness is improved when the primary spring is softer from the empty state to fixed-number passenger state.

When actually used as the primary spring, a linear characteristic spring 2 is provided concentrically within the nonlinear characteristic spring 1. That is, the primary spring has a double-spring structure. In this case, the wire diameter of the linear characteristic spring 2 is set to 20 mm and smaller than the wire diameter of the nonlinear characteristic spring 1. Further, the coil diameter of the linear characteristic spring 2 is set to 124 mm and smaller than the coil diameter of the nonlinear characteristic spring 1.

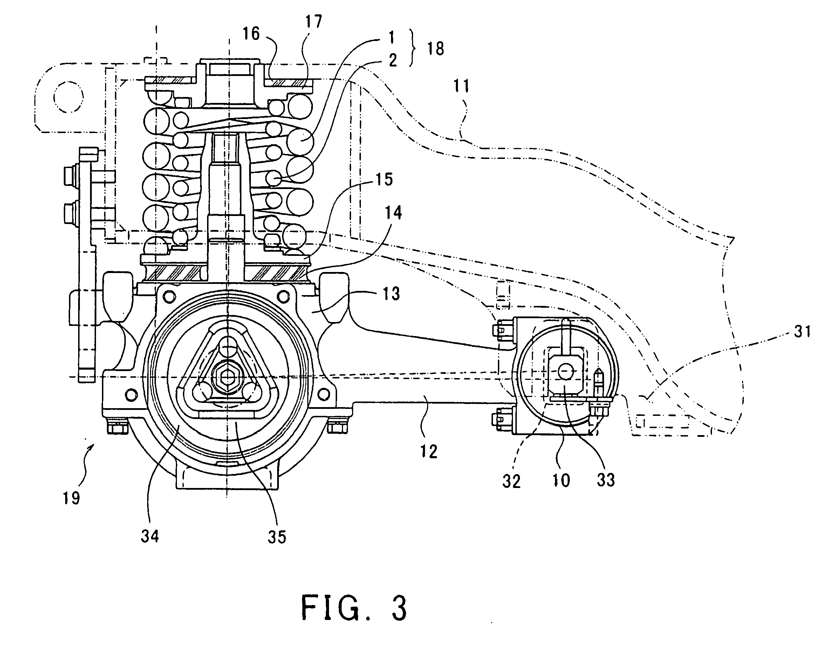

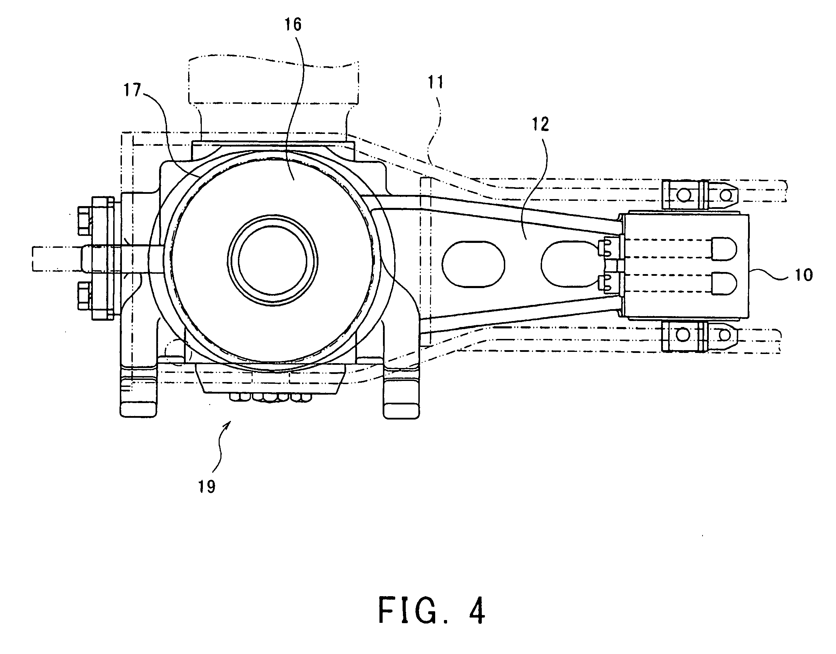

A radius arm type truck using the primary spring will be described with reference to Figs. 3 and 4.

One end of a radius arm 12 is rotatably supported by a radius arm supporting portion 31 of a base frame 11 by means of a bearing portion 10. At the bearing portion 10, the radius arm 12 is axially coupled to the supporting portion 31 by means of an elastic body 32 and a shaft 33. The elastic body 32 is fitted around the shaft 33. The deformation of the elastic body 32 allows the radius arm 12 to vertically pivot around the bearing portion 10. An axle box 13 is continuously formed integrally at the other end of the radius arm 12. The radius arm 12 projects from the axel box 13 in the direction toward which the truck travels. As mentioned above, the radius arm 12 is vertically pivotable around the connecting portion between the one end thereof and the base frame 11. As a result, the axle box 13 is vertically movable relatively to the base frame 11. An axle 35 is rotatably supported by a bearing 34 fitted to the axle box 13.

In such a construction, the relative displacements (or pivot movement) in the longitudinal, lateral and vertical directions generated between the axle 33 and the base frame 11 are allowed by deformation of the elastic body 32 and the pivot movement of the radius arm 12. As a result, traveling stability of the truck is increased.

A lower spring seat 15 is provided on the upper side of the axle box 13 with a first elastic member 14 disposed between the seat 15 and the axe box 13. Further, an upper spring seat 17 is provided in a portion of the base frame 11 located above the axle box 13 with a second elastic member 16 disposed between the seat 17 and the base frame 11. A radius arm supporting device 19 is constructed by providing a primary spring 18 between the upper and lower spring seats 15 and 17. The primary spring 18 has a double-spring structure comprised of the nonlinear characteristic spring 1 and the linear characteristic spring 2 located concentrically within the spring 1. This primary spring 18 is structured to have nonlinear characteristic in which the spring height nonlinearly varies with respect to the spring load.

The primary spring 18 includes the nonlinear characteristic spring 1 exhibiting the nonlinear characteristic in which the spring wire diameter gradually decreases as it is closer to an end portion of the spring wire. The radius arm type truck having such a primary spring is particularly effective in the case of a vehicle in which a full passenger state is rare and the load on the spring commonly varies within the range from empty state to substantially fixed-number passenger state. In accordance with this coil spring (primary spring 18), as shown in Fig. 2, the variation in spring height with respect to the load is larger (spring constant is low or spring is soft) when the load is smaller. Accordingly, riding comfortableness in the above-described passenger state is improved by setting the spring constant smaller in the range of spring flexure corresponding to the range from the empty state to substantially fixed-number passenger state.

When the linear characteristic spring is used in the truck running along a railroad provided with a third rail for power supply arranged in parallel with the rail for running, the maximum moving amount of the current collector is restricted because of its structural limitation as described above. Therefore, the spring constant of the linear coil spring is restricted according to the maximum moving amount of this current collector. However, in the case of the truck using the nonlinear characteristic spring as the primary spring, it is possible to avoid the problem that the spring constant is restricted by the limitation of the maximum moving amount of the current collector.

In the nonlinear characteristic spring 1, the tapered portions 1A and 1C each having the spring wire diameter that gradually decreases as it is closer to the end portion of the spring wire, are provided continuously on both ends of the constant-diameter portion 1B having a constant spring wire diameter. However, the present invention is not intended to be limited to this. For example, the constant-diameter portion 1B may be omitted and the tapered portions 1A and 1C may be provided to be symmetric with respect to the center in the longitudinal direction of the spring wire. Further, the ratio of the lengths between the constant-diameter portion 1B and the tapered portions 1A and 1C may be varied as desired. In the present invention, the range within which the spring constant of the primary spring is set smaller is not limited to the range of spring flexure corresponding to the range from the empty state to the substantially fixed-number passenger state of the vehicle. In vehicles to which the present invention is applicable, the spring constant of the primary spring may be set smaller in the range of spring flexure corresponding to the range from the empty state to the common load state (between the empty state and the full passenger state).

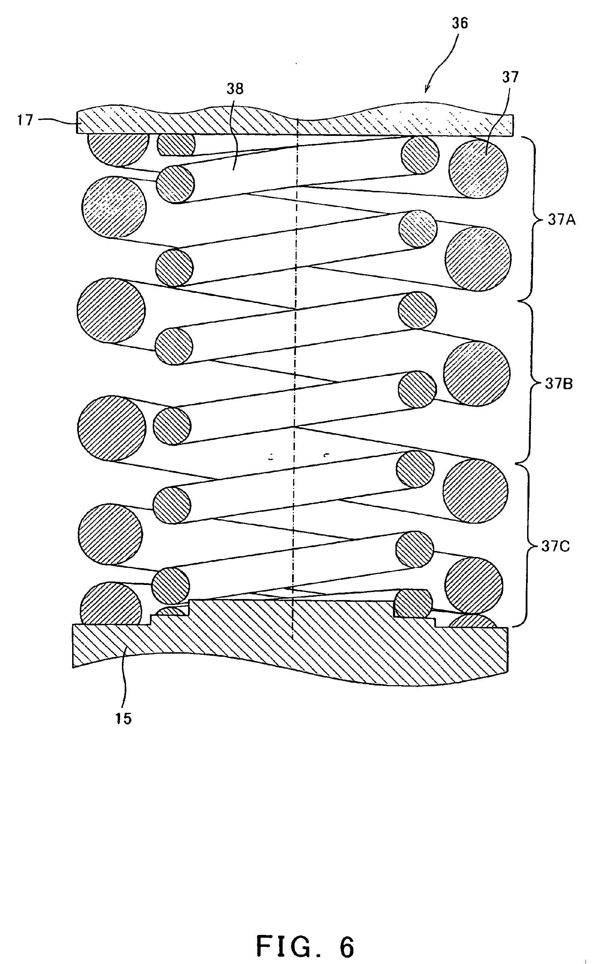

Fig. 6 shows another primary spring 36. This primary spring 36 is formed by combining a nonlinear characteristic spring 37 and a linear characteristic spring 38 located concentrically inside the nonlinear characteristic spring 37. This primary spring 36 is used in a vehicle having specification different from that of the vehicle provided with the primary spring 18 (Fig. 1). In other words, the primary spring 36 in Fig. 6 is used in the vehicle in a different load condition.

In this primary spring 36, each of upper and lower tapered portions 37A and 37C has a wire diameter of 28 to 34mm, winding number of 1.5, pitch of 60.0 mm, and coil diameter of 195mm. In the upper tapered portion 37A and the lower tapered portion 37C, a connecting portion connected to the constant-diameter portion 37B has a wire diameter of 34mm, the end portion of the spring wire has wire diameter of 28 mm, and the wire diameter linearly decreases from the connecting portion to the end portion in the range of from 34 mm to 28 mm. Its ratio is 0.82. Meanwhile, the constant-diameter portion 37B have a wire diameter of 34mm (constant), winding number of 1.5, pitch of 71. 33 mm, and coil diameter of 201 mm.

The wire diameter of the linear characteristic spring wire 38 has wire diameter of 22mm, and smaller than the diameter of the nonlinear characteristic spring 37. The coil diameter of the linear characteristic spring 38 is 134mm and is smaller than the coil diameter of the nonlinear characteristic spring 37.

Although the present invention has fully been described by way of example with reference to the accompanying drawings, it is to be understood that various changes and modifications within the scope of the invention as defined in the appended claims.

## Claims

1. A coil spring with nonlinear characteristics for a primary spring of a truck for a railway vehicle,
wherein the coil spring is formed by a nonlinear characteristic spring having a constant-diameter portion (1B) having a constant spring wire diameter, wherein a tapered portion (1A, 1C) is formed continuously on each of both ends of the constant-diameter portion (1B), wherein the tapered portion (1A, 1C) having a spring wire diameter that gradually decreases as it is closer to an end portion of a spring wire.

2. A radius arm type truck comprising:
a base frame (11);
an axle box (13) for supporting an axle (35);
a radius arm (12) rotatably supported by the base frame (11) at one end thereof and connected to the axle box (13) at an opposite end thereof; and
a coil spring according to claim 1 provided as a primary spring between an upper portion of the axle box and the base frame (11) ;

3. The radius arm type truck according to Claim 2, further comprising:
a lower spring seat (15) provided on the upper portion of the axle box (13) with a first elastic member (14) disposed between the lower spring seat (15) and the axle box (13) ; and
an upper spring seat (17) provided on the base frame (11) with a second elastic member (16) disposed between the upper spring seat (17) and the base frame (11), wherein
the coil spring is mounted between the upper spring seat (17) and the lower spring seat (15).

4. The radius arm type truck according to Claim 2, wherein the truck is constructed to run along a railroad provided with a third rail for power supply arranged in parallel with a rail for running, and
a current collector that comes in elastic contact with the third rail is attached to the base frame.

5. A railway vehicle comprising a radius arm type truck according to claim 2,
wherein the coil spring is configured such that a smaller range of spring constant thereof corresponds to a range from an empty state to a common load state between the empty state and full passenger state of the vehicle.

6. The railway vehicle according to claim 5, wherein the common load state is substantially fixed-number passenger state of the vehicle.

7. The railway vehicle according to claims 5 or 6, further comprising;
a lower spring seat (15) provided on the upper portion of the axel box (13) with a first elastic member (14) disposed between the lower spring seat (15) and the axel box (13); and
an upper spring seat (17) provided on the base frame with a second elastic member (16) disposed between the upper spring seat (17) and the base frame (11), wherein the coil spring is mounted between the upper spring seat (17) and the lower spring seat (15).

8. The railway vehicle according to claims 5 to 7, wherein the truck is constructed to run along a railroad provided with a third rail for power supply arranged in parallel with a rail for running, the railway vehicle further comprising a current collector attached to the base frame so as to come in elastic contact with the third rail.

## Patentansprüche

1. Schraubenfeder mit nicht-linearer Charakteristik für eine Primärfeder eines Drehgestells für ein Schienenfahrzeug,
wobei die Schraubenfeder durch eine Feder mit nicht-linearer Charakteristik gebildet wird, die einen Abschnitt (1B) mit konstantem Durchmesser aufweist, in welchem ein Federdrahtdurchmesser konstant ist, wobei an jedem der beiden Enden des Abschnitts (1B) mit konstantem Durchmesser durchgängig ein konischer Abschnitt (1A, 1C) ausgebildet ist, wobei ein Federdrahtdurchmesser des konischen Abschnitts (1A, 1C) allmählich abnimmt, je näher er dem Endabschnitt eines Federdrahtes kommt.

2. Drehgestell mit Führungslenker, umfassend:
einen Basisrahmen (11);
ein Achslager (13) zum Halten einer Achse (35);
einen Führungslenker (12), der an seinem einen Ende drehbar durch den Basisrahmen (11) gehalten wird und an seinem entgegengesetzten Ende mit dem Achslager (13) verbunden ist; und
eine Schraubenfeder gemäß Anspruch 1, die als eine Primärfeder zwischen einem oberen Abschnitt des Achslagers und dem Basisrahmen (11) vorgesehen ist.

3. Drehgestell mit Führungslenker nach Anspruch 2, ferner umfassend:
einen unteren Federsitz (15), der an dem oberen Abschnitt des Achslagers (13) vorgesehen ist, wobei ein erstes elastisches Element (14) zwischen dem unteren Federsitz (15) und dem Achslager (13) angeordnet ist; und
einen oberen Federsitz (17), der an dem Basisrahmen (11) vorgesehen ist, wobei ein zweites elastisches Element (16) zwischen dem oberen Federsitz (17) und dem Basisrahmen (11) angeordnet ist, wobei
die Schraubenfeder zwischen dem oberen Federsitz (17) und dem unteren Federsitz (15) montiert ist.

4. Drehgestell mit Führungslenker nach Anspruch 2,
wobei das Drehgestell dafür konstruiert ist, auf einem Schienenweg zu laufen, in welchem eine dritte Schiene zur Stromversorgung vorhanden ist, die parallel zu einer Laufschiene angeordnet ist, und wobei
ein Stromabnehmer, der mit der dritten Schiene in elastischen Kontakt kommt, an dem Basisrahmen angebracht ist.

5. Schienenfahrzeug, das ein Drehgestell mit Führungslenker gemäß Anspruch 2 umfasst,
wobei die Schraubenfeder in solcher Weise konfiguriert ist, dass ein Bereich mit kleinerer Federkonstanten derselben einem Bereich ab einem leeren Zustand bis zu einem üblichen Belastungszustand zwischen dem leeren Zustand und dem vollständig mit Fahrgästen gefüllten Zustand des Fahrzeugs entspricht.

6. Schienenfahrzeug nach Anspruch 5, bei welchem der übliche Belastungszustand im Wesentlichen ein Zustand mit einer festgelegten Anzahl von Fahrgästen für das Fahrzeug darstellt.

7. Schienenfahrzeug nach Anspruch 5 oder 6, ferner umfassend:
einen unteren Federsitz (15), der an dem oberen Abschnitt des Achslagers (13) vorgesehen ist, wobei ein erstes elastisches Element (14) zwischen dem unteren Federsitz (15) und dem Achslager (13) angeordnet ist; und
einen oberen Federsitz (17), der an dem Basisrahmen (11) vorgesehen ist, wobei ein zweites elastisches Element (16) zwischen dem oberen Federsitz (17) und dem Basisrahmen (11) angeordnet ist, wobei die Schraubenfeder zwischen dem oberen Federsitz (17) und dem unteren Federsitz (15) montiert ist.

8. Schienenfahrzeug entsprechend den Ansprüchen 5 bis 7, wobei das Drehgestell dafür konstruiert ist, auf einem Schienenweg zu laufen, in welchem eine dritte Schiene zur Stromversorgung vorhanden ist, die parallel zu einer Laufschiene angeordnet ist, wobei das Schienenfahrzeug ferner einen Stromabnehmer umfasst, der in solcher Weise an dem Basisrahmen angebracht ist, dass er elastisch mit der dritten Schiene in Kontakt kommt.

## Revendications

1. Ressort hélicoïdal avec des caractéristiques non linéaires pour un ressort principal d'un bogie pour un véhicule de chemin de fer,
dans lequel le ressort hélicoïdal est formé par un ressort à caractéristiques non linéaires ayant une partie de diamètre constant (1B) ayant un diamètre de fil de ressort constant, dans lequel une partie conique (1A, 1C) est formée de manière continue sur chacune des deux extrémités de la partie de diamètre constant (1B), dans lequel la partie conique (1A, 1C) a un diamètre de fil de ressort qui diminue graduellement alors qu'il se rapproche d'une partie d'extrémité d'un fil de ressort.

2. Bogie du type à jambe de force comprenant :
un châssis de base (11) ;
une boîte d'essieu (13) pour supporter un essieu (35) ;
une jambe de force (12) supportée en rotation par le châssis de base (11) à une extrémité de celle-ci et reliée à la boîte d'essieu (13) à une extrémité opposée de celle-ci ; et
un ressort hélicoïdal selon la revendication 1 prévu en tant que ressort principal entre une partie supérieure de la boîte d'essieu et le châssis de base (11).

3. Bogie du type à jambe de force selon la revendication 2, comprenant en outre :
un siège de ressort inférieur (15) prévu sur la partie supérieure de la boîte d'essieu (13) avec un premier élément élastique (14) disposé entre le siège de ressort inférieur (15) et la boite d'essieu (13) ; et
un siège de ressort supérieur (17) prévu sur le châssis de base (11) avec un deuxième élément élastique (16) disposé entre le siège de ressort supérieur (17) et le châssis de base (11), dans lequel
le ressort hélicoïdal est monté entre le siège de ressort supérieur (17) et le siège de ressort inférieur (15).

4. Bogie du type à jambe de force selon la revendication 2, dans lequel le bogie est réalisé pour rouler le long d'une voie ferrée pourvue d'un troisième rail pour l'alimentation agencé en parallèle avec un rail pour rouler, et
un collecteur de courant qui vient en contact élastique avec le troisième rail est fixé au châssis de base.

5. Véhicule de chemin de fer comprenant un bogie du type à jambe de force selon la revendication 2,
dans lequel le ressort hélicoïdal est configuré de sorte qu'une plus petite plage de constante de rappel de celui-ci corresponde à une plage d'un état vide à un état de charge commun entre l'état vide et l'état rempli de passagers du véhicule.

6. Véhicule de chemin de fer selon la revendication 5, dans lequel l'état de charge commun est un état avec un nombre sensiblement fixé de passagers du véhicule.

7. Véhicule de chemin de fer selon les revendications 5 ou 6, comprenant en outre :
un siège de ressort inférieur (15) prévu sur la partie supérieure de la boîte d'essieu (13) avec un premier élément élastique (14) disposé entre le siège de ressort inférieur (15) et la boîte d'essieu (13) ; et
un siège de ressort supérieur (17) prévu sur le châssis de base avec un deuxième élément élastique (16) disposé entre le siège de ressort supérieur (17) et le châssis de base (11), dans lequel le ressort hélicoïdal est monté entre le siège de ressort supérieur (17) et le siège de ressort inférieur (15).

8. Véhicule de chemin de fer selon les revendications 5 à 7, dans lequel le bogie est réalisé pour rouler le long d'une voie ferrée pourvue d'un troisième rail pour l'alimentation agencé en parallèle avec un rail pour rouler, le véhicule de chemin de fer comprenant en outre un collecteur de courant fixé au châssis de base de manière à venir en contact élastique avec le troisième rail.
